(19) Europäisches Patentamt
European Patent Office
Office européen des brevets

(11) **EP 2 905 291 B1**

(12) **EUROPEAN PATENT SPECIFICATION**

(45) Date of publication and mention
of the grant of the patent:
**12.04.2017 Bulletin 2017/15**

(51) Int Cl.:
**C08B 3/06** $^{(2006.01)}$

(21) Application number: **13843468.3**

(86) International application number:
**PCT/JP2013/077078**

(22) Date of filing: **04.10.2013**

(87) International publication number:
**WO 2014/054779 (10.04.2014 Gazette 2014/15)**

(54) **METHOD FOR PRODUCING CELLULOSE NANOFIBERS**

VERFAHREN ZUR HERSTELLUNG VON CELLULOSEFASERN

PROCÉDÉ DE FABRICATION DE NANOFIBRE DE CELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2012 JP 2012223686**

(43) Date of publication of application:
**12.08.2015 Bulletin 2015/33**

(73) Proprietor: **OLYMPUS CORPORATION
Hachioji-shi
Tokyo 192-8507 (JP)**

(72) Inventors:
• **SHIRAMIZU, Kohei
Tokyo 192-8507 (JP)**
• **LIN, Lianzhen
Kyoto-shi
Kyoto 600-8813 (JP)**

(74) Representative: **Kuhnen & Wacker
Patent- und Rechtsanwaltsbüro
Prinz-Ludwig-Straße 40A
85354 Freising (DE)**

(56) References cited:
WO-A1-2011/108461    WO-A1-2012/128315
WO-A1-2013/031444    WO-A1-2013/061639
JP-A- 2009 179 913    JP-A- 2010 104 768

• **ELIANGELA DE MORAIS TEIXEIRA ET AL:
"Cellulose nanofibers from white and naturally
colored cotton fibers", CELLULOSE, KLUWER
ACADEMIC PUBLISHERS (DORDRECHT), NL,
vol. 17, no. 3, 12 February 2010 (2010-02-12),
pages 595-606, XP019815383, ISSN: 1572-882X**
• **KARANDE V S ET AL: "Nanofibrillation of cotton
fibers by disc refiner and its characterization",
FIBERS AND POLYMERS, THE KOREAN FIBER
SOCIETY, HEIDELBERG, vol. 12, no. 3, 2 June
2011 (2011-06-02), pages 399-404, XP019911624,
ISSN: 1875-0052, DOI:
10.1007/S12221-011-0399-3**

EP 2 905 291 B1

**Description**

BACKGROUND OF THE INVENTION

Field of the Invention

The present invention relates to a method for producing cellulose nanofibers.

Description of the Related Art

From the publication "Cellulose nanofibers from white and naturally colored cotton fibers" by Eliangela De Morais Teixeira et al., Cellulose, Kluwer Academic Publishers (DORDRECHT), NL, vol. 17, No. 3, 12 February 2010, pages 595 - 606, from the publication "Nanofibrillation of cotton fibers by disc refiner and its characterization" by V.S. Karande et al., Fibers and Polymers, The Korean Fiber Society, Heidelberg, vol. 12, No. 3, 2 June 2011, pages 399 - 404, and from WO 2011/108461 A1 there is respectively known a method for producing cotton cellulose nanofibers. However, none of these prior art documents discloses or suggests the use of teraalkylammonium acetate and an aprotic polar solvent for the method.

Cellulose nanofibers are used as a reinforcing material of a polymer composite material in the related art. Specifically, cellulose nanofibers are used as a reinforcing material of, for example, medical instruments, OA apparatuses, acoustic instruments, or cameras.

Typically, the cellulose nanofibers are obtained by mechanically shearing of cellulose fibers such as pulp. For example, JP 2000-017592 A discloses microfibrillated cellulose obtained by treating an aqueous cellulose pulp suspension with a high-pressure homogenizer.

In addition, JP H9-291102 A discloses ultra-fine fibers of acetyl cellulose obtained by acetylating cellulose ultra-fine fibers produced by bacteria. The cellulose ultra-fine fibers produced by bacteria have a polymerization degree of 1700 or higher in a mass average and thus are superior in Young's modulus and tensile strength.

SUMMARY OF THE INVENTION

Problem to be Solved by the Invention

In the method disclosed in JP 2000-017592 A, since a mechanical shearing force is applied to the fiber, the polymerization degree becomes around 200. As a result, sufficient mechanical strength cannot be obtained.

In addition, since the cellulose fibers disclosed in JP J9-291102 A which are produced by bacteria have a large amount of I$\alpha$-type crystal components, a reinforcing effect is weak. From this point of view, there is room for improvement.

The present invention has been made in consideration of the above-described circumstances, and an object thereof is to provide a method for producing cellulose nanofibers having a superior reinforcing effect.

Means for Solving the Problem

The object of the invention is attained by a method according to claim 1. Further developments of the invention are specified in the dependent claims.

Effects of Invention

According to the above-described aspects, a method for producing cellulose nanofibers having a superior reinforcing effect can be provided.

BRIEF DESCRIPTION OF THE DRAWINGS

FIG 1 is a schematic diagram illustrating a cellulose nanofiber including a linear portion and curved portions.
FIG 2 is a SEM image illustrating cellulose nanofibers obtained in the Examples.
FIG 3 is the X-ray analysis results of the cellulose nanofibers obtained in the Examples.

DETAILED DESCRIPTION OF THE INVENTION

Cellulose nanofibers according to a first embodiment include a linear portion and a curved portion, in which an average of a length of the linear portion and an average of a maximum diameter of the linear portion have a relationship that satisfies the following Equation (a). As a result, cellulose nanofibers according to a first embodiment can obtain a sufficient reinforcing effect.

$$\text{(The average of the length of the linear portion)} / \text{(The average of the maximum diameter of the linear portion)} \geq 10 \qquad \text{Equation (a)}$$

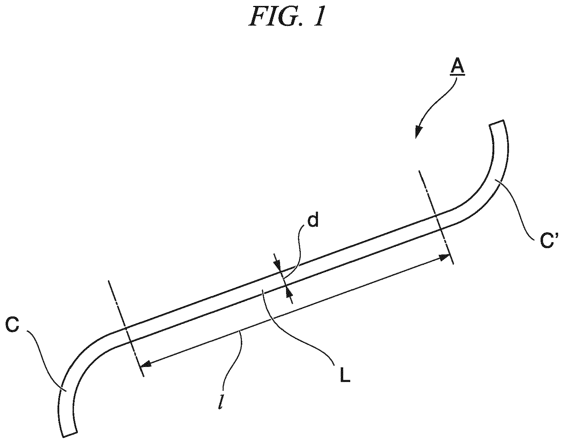

The cellulose nanofibers according to the first embodiment are shown as a cellulose nanofiber A illustrated in FIG 1 including a linear portion L and curved portions C and C'. In the present invention, a ratio of the average of the length of the linear portion of the cellulose nanofibers to the average of the maximum diameter of the linear portion (The average length of the linear portion / The average maximum diameter of the linear portion (hereinafter, also abbreviated as "$L_{AVG}/D_{AVG}$")) which is represented by the Equation (a) is 10 or more. When the value of the $L_{AVG}/D_{AVG}$ is increased, the reinforcing effect becomes strengthened.

In the cellulose nanofibers according to the first embodiment, it is preferable that the maximum diameters of the linear portions be 1 nm to 800 nm. The average diameter is preferably 1 nm to 300 nm and more preferably 1 nm to 100 nm. When the average diameter is 1 nm or more, the manufacturing cost is low. When the average diameter is 800 nm or less, the $L_{AVG}/D_{AVG}$ is unlikely to decrease. As a result, the cellulose nanofibers according to the first embodiment can obtain a sufficient reinforcing effect at a low cost.

Cellulose type I is a composite of Iα-type crystals and Iβ-type crystals. Cellulose derived from higher plants, such as cotton, contains much Iβ-type crystal components. On the other hand, bacterial cellulose contains much Iα-type crystal components.

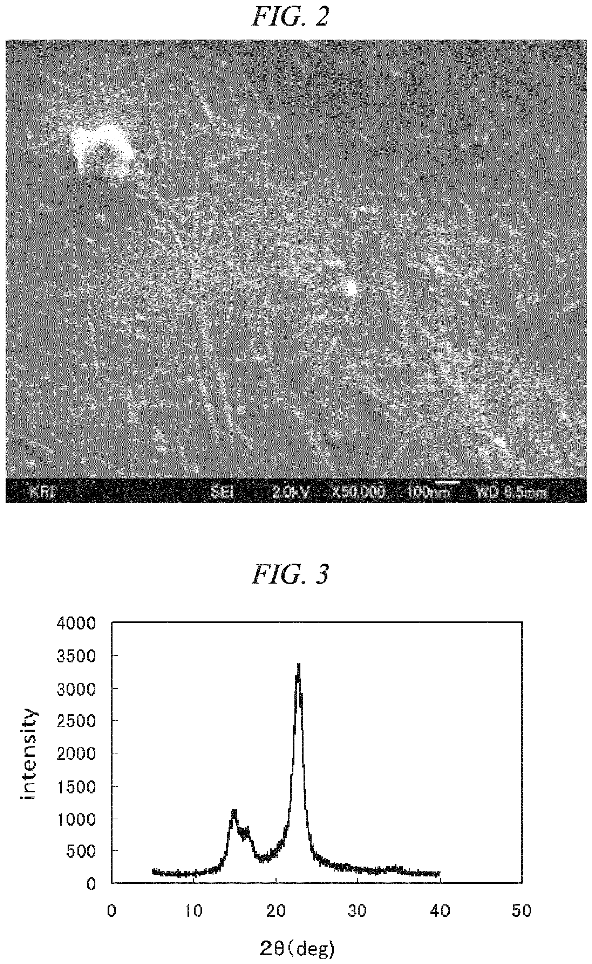

The cellulose nanofibers according to the first embodiment have an Iβ-type crystal peak in an X-ray diffraction pattern. Therefore, as illustrated in FIG 3, an X-ray diffraction pattern in a 2θ range of 0° to 30° shows a pattern unique to Iβ-type crystals. It is preferable that this pattern have one or two peaks in 14°≤2θ≤18°, one or two peaks in 20°≤2θ≤24°, and no peak in the other 2θ range.

In addition, since the cellulose nanofibers according to the first embodiment contain Iβ-type crystals as a major component, the reinforcing effect thereof is superior to that of bacterial cellulose that contains much Iα-type crystal components.

The average polymerization degree of the cellulose nanofibers according to the first embodiment is preferably 600 to 30000, more preferably 600 to 5000, and most preferably 800 to 5000. When the average polymerization degree is 600 or more, a sufficient reinforcing effect can be obtained.

In the cellulose nanofibers according to the first embodiment, a part or all of the hydroxyl groups may be chemically modified to improve functionality. In order to use the cellulose nanofibers in a composite material, it is preferable that hydroxyl groups on the surfaces of the cellulose nanofibers be chemically modified with a modification group to reduce the number of the hydroxyl groups. By preventing the cellulose nanofibers from strongly adhering to each other by a hydrogen bond, the cellulose nanofibers can be easily dispersed in a polymer material and can form a superior interface bond. In addition, the cellulose nanofibers according to the first embodiment have high heat resistance according to the chemical modification. Therefore, it is possible to provide a composite resin composition having high heat resistance.

A ratio of hydroxyl groups, which are chemically modified by a modification group, to all of the hydroxyl groups in the cellulose nanofibers is preferably 0.01 to 50 and more preferably 0.5 to 10 in the method described below.

The modification group only needs to be a group which is reactive with a hydroxyl group. The cellulose nanofibers which are etherified and esterified by the chemical modification are preferable because they can be easily and efficiently modified.

As an etherifying agent, for example, alkyl halides such as methyl chloride and ethyl chloride; dialkyl carbonate such as dimethyl carbonate and diethyl carbonate; dialkyl sulfate such as dimethyl sulfate and diethyl sulfate; and alkylene oxides such as ethylene oxide and propylene oxide are preferable. In addition, the etherification is not limited to alkyl etherification, and etherification caused by benzyl bromide, silyl etherification, and the like are also preferable. For example, in silyl etherification, alkoxysilanes are preferable. More specifically, alkoxy silanes such as n-butoxytrimethylsilane, tert-butoxytrimethylsilane, sec-butoxytrimethylsilane, isobutoxytrimethylsilane, ethoxytriethylsilane, octyldimethylethoxysilane, and cyclohexyloxytrimethylsilane; alkoxysiloxanes such as butoxypolydimethylsiloxane; and silazanes such as hexamethyldisilazane, tetramethyldisilazane, and diphenyltetramethyldisilazane are preferable. In addition, silyl halides such as trimethylsilyl chloride and diphenylbutyl chloride; and silyl trifluoromethane sulfonates such as t-butyldimethylsilyl trifluoromethane sulfonate can also be used.

As an esterifying agent, an acid chloride, an acid anhydride, or an acid vinyl ester is preferable. Examples of the acid chloride include propionyl chloride, butyl chloride, octanoyl chloride, stearoyl chloride, benzoyl chloride, and p-toluenesulfonic acid chloride. In a reaction of the acid chloride, an alkaline compound may be added so as to function as a catalyst and to neutralize an acidic material which is a by-product. Specific examples of the alkaline compound include tertiary amine compounds such as triethyl amine and trimethyl amine; and nitrogen-containing aromatic compounds such as pyridine and dimethylaminopyridine. However, the alkaline compound is not limited to these examples.

In addition, examples of the acid anhydride include aliphatic acid anhydrides such as acetic anhydride, propionic anhydride, and butyric anhyride; and dibasic acid anhydrides such as maleic anhydride, succinic anhydride, and phthalic anhydride. As a catalyst in a reaction of the acid anhydride, an acid catalyst such as sulfuric acid, hydrochloric acid, or phosphoric acid; or an alkaline compound such as triethyl amine or pyridine may be used.

Among acid vinyls esters, vinyl carboxylate is preferable. As the vinyl carboxylate, vinyl acetate, vinyl propionate, vinyl butyrate, vinyl valerate, vinyl pivalate, vinyl caproate, vinyl caprate, vinyl laurate, vinyl myristate, vinyl palmitate, vinyl stearate, vinyl cyclohexane carboxylate, vinyl octylate, vinyl methacrylate, vinyl crotonate, vinyl sorbate, vinyl benzoate, or vinyl cinnamate is more preferable; vinyl acetate, vinyl propionate, vinyl butyrate, vinyl valerate, vinyl pivalate, vinyl caproate, vinyl caprate, vinyl laurate, vinyl myristate, vinyl palmitate, vinyl stearate, vinyl cyclohexane carboxylate, or vinyl octylate is still more preferable; and vinyl acetate, vinyl propionate, or vinyl butyrate is most preferable.

Among the types of etherification and the esterification, alkyl etherification, alkyl silylation, and alkyl esterification are preferable since dispersibility in a resin is improved.

A raw material of the cellulose nanofibers is not particularly limited, and examples thereof include natural cellulose raw materials such as cotton, hemp, and ascidian; pulp obtained by chemically treating wood, such as kraft pulp and sulfide pulp; and semi-chemical pulp; used paper or recycled pulp thereof. From the viewpoint of obtaining a high reinforcing effect, filter paper or cotton is preferable. Among these, cotton is particularly preferable, because by using cotton as a raw material, the molecular weight of the acquired cellulose nanofibers becomes large, so a reinforcing effect increases. In addition, fine crystal cellulose or cellulose nanofibers produced using other production methods are also preferable as a raw material. This is because when a production method according to a second embodiment is further used, the reinforcing effect of cellulose nanofibers is improved.

The form of the raw material of the cellulose nanofibers is not particularly limited. However, from the viewpoint of easiness of treatment and promotion of solvent permeation, it is preferable that the raw material be used after appropriate pulverization.

In the cellulose nanofibers according to the first embodiment which are chemically modified as described above, the saturated absorptivity in an organic solvent having a solubility parameter (hereinafter, referred to as "SP value") of 8 to 13 is preferably 300 mass% to 30000 mass% and more preferably 5000 mass% to 30000 mass%. The cellulose nanofibers which are dispersed in the organic solvent having the above-described SP value have high affinity with a lipophilic resin and have a high reinforcing effect.

Examples of the organic solvents having an SP value of 8 to 13 include acetic acid, ethyl acetate, butyl acetate, isobutyl acetate, isopropyl acetate, methyl propyl ketone, methyl isopropyl ketone, xylene, toluene, benzene, ethyl benzene, dibutyl phthalate, acetone, isopropanol, acetonitrile, dimethyl formamide, ethanol, tetrahydrofuran, methyl ethyl ketone, cyclohexane, carbon tetrachloride, chloroform, methylene chloride, carbon disulfide, pyridine, n-hexanol, cyclohexanol, n-butanol, and nitromethane.

As the organic solvent, a water-insoluble solvent (solvent that is not mixed with water at 25°C at any ratio) is more preferable, and examples thereof include xylene, toluene, benzene, ethylbenzene, dichloromethane, cyclohexane, carbon tetrachloride, methylene chloride, ethyl acetate, carbon disulfide, cyclohexanol, and nitromethane. Accordingly, the cellulose nanofibers according to the first embodiment which are chemically modified as described above can be dispersed in a water-insoluble solvent and can be easily dispersed in a lipophilic resin in which cellulose nanofibers of the related art have difficulty being dissolved.

The cellulose nanofibers according to the first embodiment can be produced using the production method according to the fourth embodiment described below.

The cellulose nanofibers according to the first embodiment are produced using a method including: a process (hereinafter, referred to as "Process 1 ") of swelling and/or partially dissolving cellulose contained in a cellulose-containing raw material in a solution containing tetraalkylammonium acetate and an aprotic polar solvent to defibrate the cellulose; and a process (hereinafter, referred to as "Process 2") of performing chemical modification at 20°C to 65°C.

<Process 1>

Process 1 (first process) includes: a process (hereinafter, referred to as "Process 1-1") of swelling and/or partially dissolving cellulose contained in a cellulose-containing raw material in a solution containing tetraalkylammonium acetate and an aprotic polar solvent; and a process (hereinafter, referred to as "Process 1-2") of defibrating the cellulose.

(Process 1-1)

In natural cellulose, an amorphous component, which is present between fibers, functions as a binding agent, and thus the cellulose fibers are present in a state where a fiber diameter thereof is large.

In this specification, "cellulose is swollen" represents that an amorphous component, which is contained in cellulose, is swollen. According to this swelling of amorphous component, the cellulose nanofibers are loosened and easily split by an external force.

In addition, in this specification, "cellulose is partially dissolved" represents that an amorphus component, which functions as a binding agent of the cellulose nanofibers, is dissolved. By swelling and/or partially dissolving the cellulose, a binding between the cellulose nanofibers becomes weakened, and the defibration of the cellulose nanofibers can be easily performed.

Process 1-1 can be performed using a well-known method of the related art, except that the solution containing tetraalkylammonium acetate and an aprotic polar solvent is used. For example, cellulose can swollen and/or partially dissolved by dispersing a cellulose-containing raw material in the solution and leaving the dispersion to stand or stirring the dispersion. In addition, Process 1-1 and Process 1-2 may be performed at the same time.

As an alkyl group of tetraalkylammonium acetate, an alkyl group having 3 to 6 carbon atoms is preferable. When the number of carbon atoms of the alkyl group in tetraalkylammonium acetate is 3 to 6, cellulose can be sufficiently swollen and/or partially dissolved.

Specific examples of tetraalkylammonium acetate include tetrapropylammonium acetate, tetrabutylammonium acetate, tetrapentylammonium acetate, and tetrahexylammonium acetate. Among these, tetrabutylammonium acetate is more preferable. As tetraalkylammonium acetate, one kind may be used, or two or more kinds may be used in combination.

As the aprotic polar solvent, at least one solvent selected from among amide-based solvents, sulfoxide-based solvents, and pyridine-based solvents is preferable.

Specific example of the aprotic polar solvent include N,N-dimethylformamide, N,N-diethylformamide, N,N-dimethylacetamide, N,N-diethylacetamide, dimethylsulfoxide, N-methyl-2-pyrrolidone, N,N'-dimethylpropyleneurea, N,N'-dimethylethyleneurea, tetramethylurea, tetraethylurea, N,N,N',N'-tetramethylurea, pyridine, 4-methylpyridine, 2,6-dimethylpyridine, 2,4,6-trimethylpyridine, and derivatives thereof. Among these, N,N-diethylacetamide is preferable. As the aprotic polar solvent, one kind may be used, or two or more kinds may be used in combination. By using the aprotic polar solvent, the permeation of the solution into cellulose nanofibers is promoted, and Process 1-1 can be efficiently performed. In addition, the destruction of a crystal structure of the cellulose nanofibers can be prevented.

As cellulose to be dissolved in the above-described solution, for example, the same cellulose as that of the cellulose raw material described in the first embodiment may be used.

In addition, a ratio of the cellulose-containing raw material to be added to the solution is preferably 0.5 mass% to 30 mass% and more preferably 1.0 mass% to 20 mass%. By controlling the ratio of the cellulose-containing raw material to be in the above-described range, a slurry of uniformly defibrated cellulose nanofibers is effectively produced.

A processing temperature of Process 1-1 is not particularly limited, but is preferably 10°C to 120°C. When the processing temperature is lower than 10°C, the viscosity of a process liquid is increased, and a defibrating effect is decreased. On the other hand, when the processing temperature is higher than 120°C, even nanofibers are dissolved and damaged. As a result, a reinforcing effect is decreased, and the yield of nanofibers tends to be decreased.

(Process 1-2)

Process 1-2 can be performed by applying an external force to the cellulose treated in Process 1-1. Specifically, for example, well-known methods such as mechanical shearing, pulverizing, polishing, homogenizing, and ultrasonication may be used. As this means, one kind may be used alone, or two or more kinds may be used in combination.

Process 1-2 may be performed in parallel with Process 1-1 or in parallel with Process 2 described below. Alternatively, Process 1-2 may be performed after Process 2.

<Process 2>

In Process 2 (second process), it is necessary that the above-described chemical modification be performed at 20°C to 65°C. As a result, cellulose nanofibers having a $L_{AVG}/D_{AVG}$ value of 10 or higher can be obtained.

In Process 2, it is preferable that the chemical modification be performed at 55°C to 65°C. It is preferable that the above-described temperature condition be satisfied because the value of "Average lengths of Linear Portions/Average maximum diameters of Linear Portions" is likely to be increased.

In addition, in Process 2, the chemical modification is performed preferably between 15 minutes to 2 hours and more preferably between 30 minutes to 60 minutes. By controlling the time condition of the chemical modification to be in the above-described range, cellulose nanofibers having a $L_{AVG}/D_{AVG}$ value of 10 or higher can be more reliably obtained.

A composite resin composition according to a second embodiment contains the cellulose nanofibers in a resin.

An example of the above-described lipophilic resin, in which the cellulose nanofibers according to the first embodiment can be dispersed, only needs to be water-insoluble, and a resin which is widely used as an industrial material which is required to have water resistance is preferable. The lipophilic resin may be a thermoplastic resin or a thermosetting resin. Examples of the lipophilic resin include a plant-derived resin, a resin formed of carbon dioxide as a raw material, an ABS resin, alkylene resins such as polyethylene and polypropylene, a styrene resin, a vinyl resin, an acrylic resin, an amide resin, an acetal resin, a carbonate resin, a urethane resin, an epoxy resin, an imide resin, a urea resin, a silicone resin, a phenol resin, a melamine resin, an ester resin, a fluororesin, a styrol resin, and an engineering plastic. In addition, as the engineering plastic, polyamide, polybutylene terephthalate, polycarbonate, polyacetal, modified polyphenylene oxide, modified polyphenylene ether, polyphenylene sulfide, polyether ether ketone, polyether sulfone, polysulfone, polyamide imide, polyether imide, polyimide, polyarylate, polyallyl ether nitrile, and the like are preferable. In addition, among these resins, two or more kinds may be used as a mixture.

Among these resins, polycarbonate is particularly preferable due to its high impact strength.

As the polycarbonate, polycarbonate which is typically used can be used. For example, aromatic polycarbonate produced from a reaction between an aromatic dihydroxy compound and a carbonate precursor can be preferably used.

Examples of the aromatic dihydroxy compound include 2,2-bis(4-hydroxyphenyl)propane ("bisphenol A"), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)sulfide, bis(4-hydroxyphenyl)sulfone, bis(4-hydroxyphenyl)sulfoxide, bis(4-hydroxyphenyl)ether, and bis(4-hydroxyphenyl)ketone.

Examples of the carbonate precursor include carbonyl halides, carbonyl esters, and haloformates. Specific examples of the carbonate precursor include phosgene, dihaloformate of a divalent phenol, diphenyl carbonate, dimethyl carbonate, and diethyl carbonate.

In addition, the polycarbonate which is used in the second embodiment may be polycarbonate not containing an aromatic group. Examples of the polycarbonate not containing an aromatic group include alicyclic polycarbonate and aliphatic polycarbonate. The polycarbonate resin may be linear or branched. In addition, the polycarbonate resin may also be copolymer of a polymer, which is obtained by polymerizing the aromatic dihydroxy compound and the carbonate precursor, with another polymer.

The polycarbonate resin may be produced using a well-known method of the related art. For example, various methods such as interfacial polymerization, melt transesterification, and a pyridine method may be used.

Examples of the kind of the resin of the composite resin composition according to the second embodiment include a hydrophilic resin in addition to the above-described lipophilic resin. As the hydrophilic resin, non-modified cellulose nanofibers or cellulose nanofibers chemically modified with hydrophilic functional groups such as a sulfonic acid group, a carboxylic acid group, or a salt thereof have high dispersibility in a hydrophilic resin and can be suitably used.

Examples of the hydrophilic resin include resins subjected to a hydrophilic treatment, such as polyvinyl alcohol. Among these, polyvinyl alcohol is particularly preferable because it is inexpensive and has high dispersibility for cellulose nanofibers.

In addition, the composite resin composition according to the second embodiment may further contain additives such as a filler, a flame retardant promoter, a flame retardant, an antioxidant, a release agent, a colorant, and a dispersant.

As the filler, for example, carbon fibers, glass fibers, clay, titanium oxide, silica, talc, calcium carbonate, potassium titanate, mica, montmorillonite, barium sulfate, a balloon filler, a bead filler, carbon nanotubes, and the like can be used.

As the flame retardant, a halogen-based flame retardant, a nitrogen-based flame retardant, metal hydroxide, a phosphorus-based flame retardant, an organic alkali metal salt, an organic alkaline earth metal salt, a silicone-based flame retardant, expandable graphite, and the like can be used.

As the flame retardant promoter, polyfluoroolefin, antimony oxide, and the like can be used.

As the antioxidant, a phosphorus-based antioxidant, a phenol-based antioxidant, and the like can be used.

As the release agent, a higher alcohol, carboxylic acid ester, polyolefin wax, polyalkylene glycol, and the like can be used.

As the colorant, any colorants such as carbon black and phthalocyanine blue can be used.

The dispersant only needs to enable the cellulose nanofibers to be dispersed in a resin, and for example, surfactants such as anionic surfactants, cationic surfactants, nonionic surfactants, and amphoteric surfactants and polymeric dispersants can be used, and a combination thereof can also be used.

The cellulose nanofibers according to the first embodiment have a reinforcing effect as described above. Therefore, the composite resin composition according to the second embodiment containing the cellulose nanofibers is superior in strength. Accordingly, the composite resin composition according to the second embodiment can be desirably used in a field where strength is required.

In addition, the cellulose nanofibers according to the first embodiment have high dispersibility in a resin. Therefore, the composite resin composition according to the second embodiment containing the cellulose nanofibers is superior in transparency. Accordingly, the composite resin composition according to the second embodiment can secure its transparency and thus can be desirably used in a field where transparency is required.

In addition, the cellulose nanofibers according to the first embodiment have higher heat resistance than that of the cellulose nanofibers of the related art. Therefore, the composite resin composition according to the second embodiment containing the cellulose nanofibers is superior in heat resistance. Accordingly, the composite resin composition according to the second embodiment can be desirably used in a field where heat resistance is required while maintaining transparency.

A molded body according to a third embodiment is formed by molding the composite resin composition according to the second embodiment. The molded body according to the third embodiment also contains the cellulose nanofibers and thus is superior in strength and heat resistance. The molded body is not particularly limited and can be used in medical instruments, OA apparatuses, acoustic instruments, or cameras. In particular, the molded body can be desirably used in molded bodies or lens frames for cameras where strength is required.

The method for producing cellulose nanofibers according to the fourth embodiment is a method for producing the cellulose nanofibers according to the first embodiment which is the same as the production method including Process 1 and Process 2 which is described in the cellulose nanofibers according to the first embodiment.

[Examples]

Hereinafter, the present invention will be described in more detail using Examples and Comparative Examples but is not limited to the following examples.

(Example 1)

2.2 g of absorbent cotton, 92.5 g of N,N-dimethylacetamide, and 7.5 g of tetrabutylammonium acetate were added to a flask, followed by stirring at 65°C for 60 minutes to allow cellulose contained in the absorbent cotton to swell.

Next, 16 g of acetic anhydride was added to a solution in which the cellulose swelled, followed by further stirring at 65°C for 90 minutes.

After stirring, the obtained solid content was washed until tetrabutylammonium acetate was not detected.

N,N-dimethylacetamide was added to the obtained solid content, followed by a treatment with a homogenizer. As a result, a slurry of cellulose nanofibers was obtained.

The obtained slurry of cellulose nanofibers was dried, and the form thereof was observed using FE-SEM (manufactured by JEOL Ltd., product name: JSM-6700f, measurement condition: 20 mA, 60 seconds). Before the observation, the cellulose nanofibers were coated with Pt. The average of diameters of linear portions of the obtained cellulose nanofibers was about 30 nm. Through the IR analysis of the obtained cellulose nanofibers, it was confirmed that hydroxyl groups on the surface of the cellulose nanofibers were modified. The results are shown in Table 1 together.

The cellulose nanofiber slurry was mixed with polycarbonate (manufactured by Teijin Ltd.; PANLITE L-1225L) dissolved in a solvent, followed by drying. As a result, a composite resin composition was prepared.

(Example 2)

7.5 g of filter paper (manufactured by Toyo Roshi Kaisha Ltd., FILTER PAPER ofADVANTEC (registered trademark)), which was cut into a size of 3 mm × 3 mm with scissors, 90 g of N,N-dimethylacetamide, and 10 g of tetrabutylammonium acetate were added to a flask, followed by stirring at 65°C for 60 minutes to allow cellulose contained in the filter paper to swell (swelling process).

Next, 40 g of acetic anhydride was added to a solution in which the cellulose swelled, followed by further stirring at 65°C for 60 minutes.

After stirring, the obtained solid content was washed until tetrabutylammonium acetate was not detected (chemical modification process).

N,N-dimethylacetamide was added to the obtained solid content, followed by a treatment with a homogenizer. As a result, a slurry of cellulose nanofibers was obtained.

The obtained slurry of cellulose nanofibers was dried, and the form thereof was observed using FE-SEM (manufactured by JEOL Ltd., product name: JSM-6700f, measurement condition: 20 mA, 60 seconds). Before the observation, the cellulose nanofibers were coated with Pt. The average of diameters of linear portions of the obtained cellulose nanofibers was about 30 nm. Through the IR analysis of the obtained cellulose nanofibers, it was confirmed that hydroxyl groups on the surface of the cellulose nanofibers were modified. The results are shown in Table 1 together.

The cellulose nanofiber slurry was mixed with polycarbonate (manufactured by Teijin Ltd.; PANLITE L-1225L) dissolved in a solvent, followed by drying. As a result, a composite resin composition was prepared.

(Example 3)

Cellulose nanofibers were obtained with the same method as that of Example 2, except that the solution was stirred at 50°C for 3 hours in the swelling process and was stirred at a solution temperature of 50°C for 30 minutes in the chemical modification process.
The average of diameters of linear portions of the obtained cellulose nanofibers was about 30 nm. Through the IR analysis of the obtained cellulose nanofibers, it was confirmed that hydroxyl groups on the surface of the cellulose nanofibers were modified. The results are shown in Table 1 together.

(Example 4)

Cellulose nanofibers were obtained with the same method as that of Example 2, except that the solution was stirred at a solution temperature of 20°C for 120 minutes in the chemical modification process.
The average of diameters of linear portions of the obtained cellulose nanofibers was about 30 nm. Through the IR analysis of the obtained cellulose nanofibers, it was confirmed that hydroxyl groups on the surface of the cellulose nanofibers were modified. The results are shown in Table 1 together.

(Example 5)

Cellulose nanofibers were obtained with the same method as that of Example 2, except that the solution was stirred at room temperature for 20 minutes in the swelling process and was stirred at a solution temperature of 65°C for 15 minutes in the chemical modification process.
The average of diameters of linear portions of the obtained cellulose nanofibers was about 30 nm. Through the IR analysis of the obtained cellulose nanofibers, it was confirmed that hydroxyl groups on the surface of the cellulose nanofibers were modified. The results are shown in Table 1 together.

(Comparative Example 1)

Bacterial cellulose obtained by drying NATA DE COCO (manufactured by Fujicco Co., Ltd., average polymerization degree: 3000 or higher, average aspect ratio: 1000 or higher, average diameter: 70 nm) was prepared. The bacterial cellulose was mixed with polycarbonate (manufactured by Teijin Ltd.; PANLITE L-1225L) dissolved in a solvent, followed by drying. As a result, a composite resin composition was prepared.

(Comparative Example 2)

Fine crystal cellulose (manufactured by Merck KGaA, average polymerization degree: 250, average aspect ratio: 10, diameter: mixed in a range of 1 $\mu$m to 10 $\mu$m) was prepared. Using this fine crystal cellulose, a composite resin composition was prepared with the same method as that of Comparative Example 1.
The cellulose nanofibers and the composite resin compositions obtained in the respective Examples and the respective Comparative Examples were measured using the following test methods, and the results thereof are shown in Table 1.
The molded bodies obtained in the respective Examples and the respective Comparative Examples were measured using the following test method, and the results thereof are shown in Table 1.

(1) Measurement of Average Polymerization degree

The molecular weight of the cellulose nanofibers was evaluated by viscometry (reference: Macromolecules, 18, 2394-2401, 1985).

(2) Ratio of Lengths of Linear Portions to Maximum Diameters of Linear Portions

The number average lengths of linear portions of the cellulose nanofibers and the number average maximum diameters of the linear portions were evaluated by SEM analysis.
Specifically, the slurry of cellulose nanofibers was cast on a wafer and was observed by SEM to obtain an image. Per image, the lengths 1 and the maximum diameters d of the linear portions were read for more than 20 fibers which have a linear portion. The largest 10 values were selected from among values of "Lengths 1 of Linear Portions/Maximum Diameters d of Linear Portions" to obtain information regarding the maximum diameters and the lengths.

From the above-obtained data regarding the lengths 1 and the maximum diameters d of the linear portions, the number average $L_{AVG}$ of the lengths of the linear portions and the number average $D_{AVG}$ of the maximum diameters of the linear portions were able to be calculated, and a ratio of the number average $L_{AVG}$ of the lengths of the linear portions to the number average $D_{AVG}$ of the maximum diameters of the linear portions was calculated by the following equation (a). A case where the ratio was 10 or higher was determined as "Good", and a case where the ratio was lower than 10 was determined as "Poor".

$$\text{Average lengths of Linear Portions/Average maximum diameters of Linear Portions} \geq 10$$

$$\ldots \qquad (a)$$

(3) Crystal Structure Analysis (XRD)

A crystal structure of the cellulose nanofibers was analyzed using a powder X-ray diffractometer Rigaku Ultima IV. A case where an X-ray diffraction pattern had one or two peaks in $14° \leq 2\theta \leq 18°$ and had one or two peaks in $21° \leq 2\theta \leq 24°$ was determined as "Good" in which the crystal structure was I$\beta$-type. The other cases were determined as "Poor".

(4) Heat Decomposition Temperature (TG-DTA)

The cellulose nanofibers were measured using a thermal analysis instrument THERMO plus TG 8120. A graph in which the vertical axis represents the weight loss ratio and the horizontal axis represents the temperature was drawn, and a temperature at an intersection between a tangent line during a large weight loss and a tangent line before the weight loss was set as a heat decomposition temperature.

(5) Evaluation Method of Modification Degree A1 of Hydroxyl Groups

The modification degree of hydroxyl groups was calculated from a ratio of an intensity of corresponding characteristic band to an intensity of CH in cellulose ring (Around 1367 cm$^{-1}$), which are obtained from FT-IR. That is, for example, when a C=O group (around 1736 cm$^{-1}$) is obtained by modification, the modification degree of hydroxyl groups can be obtained by dividing this strength by the strength of CH.

(6) Evaluation of Saturated Absorptivity R

Cellulose nanofibers having a weight (W1) were dispersed in N,N-dimethylacetamide (SP value: 11.1) to prepare 2 wt% of a dispersion. The dispersion was put into a centrifugal flask to be treated with a centrifuge (HITACHI CR22G III) at 10000 G for 30 minutes. Next, after an upper transparent solvent layer was removed, the weight (W2) of a lower gel layer was measured. Then, a saturated absorptivity was calculated from the following equation.

$$R = W2/W1 \times 100\%$$

A case where the saturated absorptivity was 5000 mass% to 30000 mass% was determined as "Good", a case where the saturated absorptivity was 300 mass% to less than 5000 mass% was determined as "Fair", and a case where the saturated absorptivity was less than 300 mass% was determined as "Poor".

[Table 1]

|  | Example 1 | Example 2 | Example 3 | Example 4 | Example 5 | Comparative Example 1 | Comparative Example 2 |
|---|---|---|---|---|---|---|---|
| Raw Material | Cotton | Filter Paper | Filter Paper | Filter Paper | Filter Paper | Nata De Coco | Fine Crystal Cellulose |
| Processing Temperature (°C) | 65 | 65 | 50 | 20 | 65 | - | - |

(continued)

| | Example 1 | Example 2 | Example 3 | Example 4 | Example 5 | Comparative Example 1 | Comparative Example 2 |
|---|---|---|---|---|---|---|---|
| Processing Time (min) | 90 | 60 | 30 | 120 | 15 | - | - |
| Polymerization Degree | 800 | 800 | 800 | 800 | 800 | 3000 | 250 |
| Crystal Type | Good | Good | Good | Good | Good | Poor | Good |
| Linear Portion | Good | Good | Good | Good | Good | Poor | Poor |
| Heat Decomposition Temperature | 360 | 350 | 350 | 350 | 350 | 300 | 300 |
| Modification Degree | 1.8 | 1.4 | 1.1 | 1 | 1.2 | 0 | 0 |
| Saturated Absorptivity | Good | Fair | Fair | Fair | Fair | Poor | Poor |
| XRD | Good | Good | Good | Good | Good | Poor | Good |

The molded bodies obtained in the respective Examples and the respective Comparative Examples were measured using the following test methods, and the results thereof are shown in Table 2.

(1) Heat Resistance

The composite resin composition was pressed into a sheet-like molded body having a thickness of 0.3 mm at 260°C for 30 seconds, and the external appearance of the sheet-like molded body was observed by visual inspection. A case where the overall color is lighter than DIC color guide DIC-647 was determined as "Good", and a case where the overall color is deeper than DIC color guide DIC-647 was determined as "Poor".

(2) Evaluation of Intensity

The bending strength of the composite resin composition was measured according to ISO 178 using an autograph AG-X PLUS (manufactured by Shimadzu Corporation).
A case where the bending strength was 100 MPa or higher was determined as "Good", and a case where the bending strength was lower than 100 MPa was determined as "Poor".

[Table 2]

| | Example 1 | Example 2 | Example 3 | Example 4 | Example 5 | Comparative Example 1 | Comparative Example 2 |
|---|---|---|---|---|---|---|---|
| Heat Resistance | Good | Good | Good | Good | Good | Poor | Poor |
| Bending Strength | Good | Good | Good | Good | Good | Poor | Poor |

As shown in Table 2, all the molded bodies according to the third embodiment obtained in Examples were superior in heat resistance and bending strength.

INDUSTRIAL APPLICABILITY

According to the above-described embodiments, cellulose nanofibers having a superior reinforcing effect can be provided. Moreover, a method for producing the cellulose nanofibers, a composite resin composition containing the cellulose nanofibers, and a molded body formed by molding the composite resin composition can be provided.

REFERENCE SIGNS LIST

A CELLULOSE NANOFIBERS INCLUDING LINEAR PORTION AND CURVED PORTIONS
L LINEAR PORTION
C CURVED PORTION
C' CURVED PORTION
1 LENGTH OF LINEAR PORTION
d MAXIMUM DIAMETER OF LINEAR PORTION

**Claims**

1. A method for producing cellulose nanofibers, which comprise a linear portion, and a curved portion, wherein an average of a length of the linear portion and an average of a maximum diameter of the linear portion have a relationship that satisfies the following Equation (a):

$$\text{(The average of the length of the linear portion)} / \text{(The average of the maximum diameter of the linear portion)} \geq 10 \qquad \text{Equation (a)},$$

the method comprising:

a first process of defibrating a cellulose by swelling and/or partially dissolving the cellulose contained in a cellulose-containing raw material, in a solution containing a tetraalkylammonium acetate and an aprotic polar solvent; and
a second process of performing a chemical modification at 20°C to 65°C.

2. The method for producing cellulose nanofibers according to Claim 1, wherein the maximum diameter of the linear portion is 1 nm to 800 nm.

3. The method for producing cellulose nanofibers according to Claim 1 or 2,
wherein an X-ray diffraction pattern, which has a $2\theta$ range of 0° to 30°, has one or two peaks in $14° \leq 2\theta \leq 18°$,
the X-ray diffraction pattern has one or two peaks in $20° \leq 2\theta \leq 24°$, and
the X-ray diffraction pattern has no peak in the other $2\theta$ range.

4. The method for producing cellulose nanofibers according to any one of Claims 1 to 3,
wherein an average polymerization degree of the cellulose nanofibers is 600 to 30000.

5. The method for producing cellulose nanofibers according to any one of Claims 1 to 4,
wherein a part or all of hydroxyl groups of the cellulose nanofibers are chemically modified.

6. The method for producing cellulose nanofibers according to any one of Claims 1 to 5,
wherein a cotton is used as a raw material of the cellulose nanofibers.

7. The method for producing the cellulose nanofibers according to anyone of Claims 1 to 6,
wherein the chemical modification is performed at 50°C to 65°C in the second process.

8. The method for producing the cellulose nanofibers according to anyone of Claims 1 to 7,
wherein the chemical modification is performed between 15 minutes to 2 hours in the second process.

9. The method for producing the cellulose nanofibers according to Claim 8,
wherein the chemical modification is performed between 30 minutes to 60 minutes in the second process.

**Patentansprüche**

1. Verfahren zum Herstellen von Zellulose-Nanofasern, die einen linearen Abschnitt und einen gebogenen Abschnitt aufweisen, wobei eine Durchschnittslänge des linearen Abschnitts und ein Durchschnitt eines Maximaldurchmessers des linearen Abschnitts ein Verhältnis aufweisen, das die folgende Gleichung (a) erfüllt:

$$\text{(Durchschnittslänge des linearen Abschnitts)} / \text{(durchschnittlicher Maximaldurchmesser des linearen Abschnitts)} \geq 10 \quad \text{Gleichung (a),}$$

wobei das Verfahren Folgendes aufweist:

einen ersten Vorgang des Zerfaserns einer Zellulose durch Schwellen und/oder teilweises Auflösen der in einem zellulosehaltigen Rohmaterial enthaltenen Zellulose, in einer Lösung, die ein Tetraalkylammoniumazetat und ein aprotisches polares Lösungsmittel enthält; und
einen zweiten Vorgang des Durchführens einer chemischen Modifikation bei 20 °C bis 65 °C.

2. Verfahren zum Herstellen von Zellulose-Nanofasern nach Anspruch 1, wobei der Maximaldurchmesser des linearen Abschnitts zwischen 1 nm und 800 nm beträgt.

3. Verfahren zum Herstellen von Zellulose-Nanofasern nach Anspruch 1 oder 2, wobei ein Röntgendiagramm, das einen $2\theta$-Bereich zwischen 0° und 30° aufweist, eine oder zwei Spitzen in $14°\leq 2\theta\leq 18°$ aufweist, das Röntgendiagramm eine oder zwei Spitzen in $20°<2\theta<24°$ aufweist, und das Röntgendiagramm keine Spitze in dem anderen $2\theta$-Bereich aufweist.

4. Verfahren zum Herstellen von Zellulose-Nanofasern nach einem der Ansprüche 1 bis 3, wobei ein durchschnittlicher Polymerisierungsgrad der Zellulose-Nanofasern zwischen 600 und 30.000 liegt.

5. Verfahren zum Herstellen von Zellulose-Nanofasern nach einem der Ansprüche 1 bis 4, wobei ein Teil der oder alle Hydroxylgruppen der Zellulose-Nanofasern chemisch modifiziert sind.

6. Verfahren zum Herstellen von Zellulose-Nanofasern nach einem der Ansprüche 1 bis 5, wobei eine Baumwolle als ein Rohmaterial der Zellulose-Nanofasern verwendet wird.

7. Verfahren zum Herstellen der Zellulose-Nanofasern nach einem der Ansprüche 1 bis 6, wobei die chemische Modifikation bei 50°C bis 65°C in dem zweiten Vorgang durchgeführt wird.

8. Verfahren zum Herstellen der Zellulose-Nanofasern nach einem der Ansprüche 1 bis 7, wobei die chemische Modifikation zwischen 15 Minuten und 2 Stunden lang in dem zweiten Vorgang durchgeführt wird.

9. Verfahren zum Herstellen der Zellulose-Nanofasern nach Anspruch 8, wobei die chemische Modifikation zwischen 30 Minuten und 60 Minuten lang in dem zweiten Vorgang durchgeführt wird.

**Revendications**

1. Procédé de production de nanofibres de cellulose, qui comprennent une partie linéaire, et une partie incurvée, dans lequel une moyenne d'une longueur de la partie linéaire et une moyenne d'un diamètre maximum de la partie linéaire ont une relation qui satisfait l'équation (a) suivante :

$$\text{(La moyenne de la longueur de la partie linéaire)} / \text{(La moyenne du diamètre maximum de la partie linéaire)} \geq 10 \quad \text{Equation (a),}$$

le procédé comprenant :

un premier processus consistant à défibrer une cellulose par le gonflement et/ou la dissolution partielle de la cellulose contenue dans une matière première contenant de la cellulose, dans une solution contenant un acétate de tétraalkylammonium et un solvant polaire aprotique ; et
un second processus consistant à effectuer une modification chimique à une température de 20 °C à 65 °C.

2. Procédé de production de nanofibres de cellulose selon la revendication 1,
dans lequel le diamètre maximum de la partie linéaire fait de 1 nm à 800 nm.

3. Procédé de production de nanofibres de cellulose selon la revendication 1 ou 2,
dans lequel un motif de diffraction de rayons X, qui a une plage $2\theta$ de 0° à 30°, a un ou deux pics dans $14°{\leq}2\theta{\leq}18°$,
le motif de diffraction de rayons X a un ou deux pics dans $20°{\leq}2\theta{\leq}24°$ et
le motif de diffraction de rayons X n'a aucun pic dans l'autre plage $2\theta$.

4. Procédé de production de nanofibres de cellulose selon l'une quelconque des revendications 1 à 3,
dans lequel un degré de polymérisation moyen des nanofibres de cellulose est de 600 à 30 000.

5. Procédé de production de nanofibres de cellulose selon l'une quelconque des revendications 1 à 4,
dans lequel une partie ou la totalité des groupes hydroxyle des nanofibres de cellulose sont chimiquement modifiés.

6. Procédé de production de nanofibres de cellulose selon l'une quelconque des revendications 1 à 5,
dans lequel un coton est utilisé comme matière première des nanofibres de cellulose.

7. Procédé de production des nanofibres de cellulose selon l'une quelconque des revendications 1 à 6,
dans lequel la modification chimique est effectuée à une température de 50 °C à 65 °C dans le second processus.

8. Procédé de production des nanofibres de cellulose selon l'une quelconque des revendications 1 à 7,
dans lequel la modification chimique est effectuée entre 15 minutes et 2 heures dans le second processus.

9. Procédé de production des nanofibres de cellulose selon la revendication 8,
dans lequel la modification chimique est effectuée entre 30 minutes et 60 minutes dans le second processus.

*FIG. 1*

## FIG. 2

## FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011108461 A1
- JP 2000017592 A

- JP H9291102 A

**Non-patent literature cited in the description**

- Cellulose, Kluwer Academic Publishers. **ELIANGELA DE MORAIS TEIXEIRA et al.** Cellulose nanofibers from white and naturally colored cotton fibers. 12 February 2010, vol. 17, 595-606

- Nanofibrillation of cotton fibers by disc refiner and its characterization. **V.S. KARANDE et al.** Fibers and Polymers. The Korean Fiber Society, 02 June 2011, vol. 12, 399-404
- *Macromolecules,* 1985, vol. 18, 2394-2401